# FASCICULE DE BREVET EUROPEEN

(11) **EP 2 282 294 B1**
(45) Date de publication et mention de la délivrance du brevet: **04.03.2015**
(21) Numéro de dépôt: 10168877.8
(22) Date de dépôt: 08.07.2010
(51) Int. Cl.: G06T 7/00, G06K 9/32, G06K 9/00

(54) **Procédé de définition d'une fenêtre de recherche**
Verfahren zur Definition eines Suchfensters
Method for defining a search window

(30) Priorité: 08.07.2009 FR 0903383
(43) Date de publication de la demande: 09.02.2011
(73) Titulaire: VALEO VISION, 93012 Bobigny (FR)
(72) Inventeur: Ahiad, Samia, 93250 Villemomble (FR); Bensrhair, Abdelaziz, 76130 Mont Saint Aignan (FR); Hue, David, 78400 Chatou (FR)

(56) Documents cités:
- US-A1- 2003 083 790
- NICOLAS HAUTIÉRE ET AL: "Automatic fog detection and estimation of visibility distance through use of an onboard camera" MACHINE VISION AND APPLICATIONS, SPRINGER, BERLIN, DE, vol. 17, no. 1, 1 avril 2006 (2006-04-01), pages 8-20, XP019323919 ISSN: 1432-1769
- POMERLEAU D: "Visibility estimation from a moving vehicle using the RALPH vision system" INTELLIGENT TRANSPORTATION SYSTEM, 1997. ITSC '97., IEEE CONFERENCE ON BOSTON, MA, USA 9-12 NOV. 1997, NEW YORK, NY, USA,IEEE, US, 9 novembre 1997 (1997-11-09) , pages 906-911, XP010270909 ISBN: 978-0-7803-4269-9

## Description

La présente invention porte sur un procédé de définition d'une fenêtre de recherche d'une région d'intérêt dans une image. Elle concerne également un système disposant de moyens aptes à mettre en oeuvre ce procédé ainsi qu'un procédé de détermination d'une distance de visibilité par temps de brouillard.

Une application préférée de l'invention est le domaine de l'équipement automobile pour, en particulier, la détection de la distance de visibilité par temps de brouillard.

Avec le développement des technologies de l'électronique, des capteurs et des moyens de traitement, de nombreuses améliorations ont été proposées pour rendre plus sûre ou confortable la conduite des véhicules. Certaines de ces améliorations reposent sur l'analyse d'une image de l'environnement du véhicule pour adapter le comportement du véhicule ou pour informer le conducteur. Tel est le cas des systèmes de détermination d'une distance de visibilité. Ces systèmes visent notamment à adapter l'éclairage du véhicule en fonction de la distance de visibilité.

De manière connue, ces systèmes prévoient l'acquisition d'une image et la détermination dans cette image d'une région d'intérêt destinée à faire l'objet d'un traitement en temps réel. La détermination d'une région d'intérêt vise à limiter la zone de l'image faisant l'objet d'un traitement et par conséquent à diminuer la quantité d'informations à traiter. Elle permet ainsi de réduire le temps et les ressources nécessaires au traitement. Elle permet également d'exclure les éléments de l'image qui en perturberaient le traitement.

Par exemple, l'article de N. Hautière et al. "Automatic fog detection and estimation of visibility distance through use of an onboard camera", Machine Vision and Applications, 2006, 17(1), présente un procédé de définition d'une fenêtre de recherche dans une image routière utilisée pour déterminer une distance de visibilité.

Déterminer une région d'intérêt implique traditionnellement la définition d'une fenêtre de recherche au sein de laquelle s'opère ensuite la détermination de la région d'intérêt. Dans les technologies existantes, la fenêtre de recherche est une simple bande verticale traversant l'image selon sa hauteur et délimitée latéralement par deux bordures rectilignes verticales.

On comprend aisément que la définition de la fenêtre de recherche impacte directement le domaine de formation de la région d'intérêt et donc l'ampleur et la qualité du traitement numérique si bien que l'optimisation de la définition de la fenêtre de recherche est un point important du traitement complet.

La présente invention vise à optimiser la définition d'une fenêtre de recherche dans une image et particulièrement une image routière.

A cet effet, on prévoit selon l'invention un procédé de définition d'une fenêtre de recherche d'une région d'intérêt tel que défini à la revendication 1.

Grâce à cette disposition, la forme de la fenêtre peut être adaptée, c'est-à-dire déformée, relativement à la forme d'une simple bande de sorte à ajuster la morphologie de la fenêtre à la configuration routière. Des détails montreront plus loin dans la description que cela permet notamment de donner à la fenêtre une forme variant selon la présence (et l'amplitude) ou l'absence d'un virage.

Le procédé selon l'invention pourra en outre présenter, de manière facultative, au moins l'une quelconque des caractéristiques suivantes :
- on positionne la portion non verticale de sorte qu'elle se situe au moins partiellement dans une zone de l'image de transition entre une chaussée routière et le ciel. Ainsi, la forme de la fenêtre est modifiée à un endroit important de l'image notamment dans le contexte de calcul de distance de visibilité puisque c'est une zone de discontinuité de milieux dans l'image ;
- la bordure comporte une portion de base verticale en dessous de la portion non verticale. Il s'agit d'être sélectif sur la forme de la fenêtre surtout au niveau de la zone située au-dessus de la portion de base verticale. Selon une variante de réalisation la bordure comprend en outre une portion haute verticale au dessus de la portion non verticale. Cela permet d'être encore davantage sélectif au niveau d'une zone intermédiaire entre deux zones où la bordure est verticale
- la portion non verticale peut être un segment de droite horizontale ; c'est notamment avantageux pour que cette zone de la fenêtre opère un décroché entre une zone inférieure et une zone supérieure. Il peut aussi s'agir d'un segment de droite incliné ; dans ce cas, une réalisation avantageuse est que cette portion inclinée relie progressivement deux zones, inférieure et supérieure. Une autre possibilité est une portion de ligne curviligne ;

- on définit au moins une portion non verticale sur l'autre des bordures. Cette option accroît les possibilités de choix de forme pour la fenêtre. Dans un cas préféré, la portion verticale sur l'autre bordure est située sensiblement en vis-à-vis de la portion non verticale de la première bordure suivant la hauteur de l'image si bien que ces portions forment une zone spécifique de la fenêtre délimitée latéralement par deux portions non verticales ;
- les portions non verticales des deux bordures sont parallèles ; de plus, l'ensemble des deux bordures peuvent être parallèles.
- on définit plusieurs zones dans la fenêtre de recherche avec :
   une zone de base délimitée latéralement par une portion verticale de base de chacune des bordures ;
   une deuxième zone située au dessus de ladite zone de base et délimitée latéralement par la portion non verticale de chacune des bordures. Cette configuration est particulièrement bien adaptée à l'environnement routier puisque la zone de base sensiblement rectangulaire peut être positionnée au niveau de la chaussée et être ainsi affectée à une portion de l'image spécifique. La modulation de la fenêtre de recherche peut ainsi ne porter que sur la deuxième zone de cette fenêtre, le procédé étant ainsi moins lourd en calculs. Cette modulation peut être fonction des virages, par exemple une modulation en fonction de la courbure de la route.
- on définit une troisième zone délimitée latéralement par une portion verticale haute de chacune des bordures, ladite deuxième zone reliant ladite zone de base et ladite troisième zone La deuxième zone correspond ainsi à une zone intermédiaire assurant également quant à elle une transition entre la zone de base et la troisième zone. On peut par ailleurs procéder à un décalage latéral de la partie haute par rapport à la zone de base, la zone intermédiaire se déforme pour assurer la continuité entre la zone de base et la troisième zone. Egalement selon la forme de la zone intermédiaire, la transition peut être plus ou moins brutale.
- on définit la position d'un point de fuite d'une chaussée routière et on positionne latéralement la zone de base en fonction de la position du point de fuite. Cela procure un raffinement avantageux dans le calage de la zone de base relativement à la chaussée. Une possibilité est de centrer latéralement la zone de base sur le point de fuite.
- on obtient la position du point de fuite d'un dispositif de détection de franchissement de ligne blanche. Un tel dispositif, dont font partie les systèmes connus sous l'acronyme LDWS (pour lane departure warning system), équipe de plus en plus de véhicule et comporte des moyens à la fois vidéo et de traitement pour déterminer le point de fuite. On combine ainsi avantageusement les deux technologies que l'on aurait pu penser totalement distinctes.
- les bordures non verticales de la deuxième zone sont déplacées et/ou déformées selon l'orientation du virage, ledit point de fuite PF étant à l'intérieur de la deuxième zone ; ceci permet par exemple d'adapter la fenêtre de recherche à la courbure de la route.
- on positionne la troisième zone avec un décalage latéral relativement à la zone de base, le décalage étant fonction d'une information de courbure d'un virage de la chaussée routière. Combinée au calage de la zone de base sur le point de fuite, cette solution est particulièrement adaptée au traitement de virages. La deuxième zone se déformant alors pour continuer à assurer la transition entre la zone de base et la troisième zone, la deuxième zone va globalement se former en fonction de la courbure du virage, lorsque le décalage latéral est effectué vers l'intérieur du virage.
- l'information de courbure de virage est obtenue depuis une cartographie d'un système de navigation ou correspond à une valeur calculée par analyse d'image ou encore est issue d'une mesure d'angle de rotation du volant. Suivant une alternative, l'angle correspond à l'angle de rotation d'un projecteur tel qu'issu d'un dispositif d'éclairage directionnel encore appelé « bending light system » qui adapte l'angle de projection lumineuse à l'angle des virages.
- on définit la position d'au moins un point d'une ligne d'horizon de l'image et on centre verticalement la deuxième zone sur ledit point de la ligne d'horizon. Ce point peut être le point de fuite indiqué précédemment. La ligne d'horizon peut aussi être définie, notamment par des capteurs d'assiette du véhicule.

Dans un exemple de mise en oeuvre de l'invention, on définit au moins deux zones dans la fenêtre de recherche avec :
une zone de base délimitée latéralement par une portion verticale de base de chacune des bordures ;
une deuxième zone située au dessus de ladite zone de base et délimitée latéralement par la portion non verticale de chacune des bordures.

L'invention concerne aussi un procédé de détermination d'une distance de visibilité par temps de brouillard dans lequel on détermine une région d'intérêt au sein d'une fenêtre de recherche définie en mettant en oeuvre le procédé précédent et dans laquelle on détermine un niveau moyen de luminance pour une pluralité de lignes de cette région d'intérêt, on en déduit un profil de luminance, on identifie un point d'inflexion sur ce profil de luminance et on déduit de ce point d'inflexion une distance de visibilité.

L'invention est aussi relative à un système pour déterminer une fenêtre de recherche de région d'intérêt dans une image caractérisé en qu'il comprend un dispositif d'acquisition d'une image et des moyens de traitement agencés pour mettre en oeuvre le procédé de détermination d'une distance de visibilité par temps de brouillard selon la présente invention ou le procédé de détermination d'une distance de visibilité par temps de brouillard énoncé au paragraphe précédent.

Suivant un aspect de l'invention utilisable séparément du procédé précédent, le système pour déterminer une fenêtre de recherche de région d'intérêt dans une image dispose d'un dispositif de détection de franchissement de lignes blanches configuré pour produire des données de définition d'une position d'un point de fuite et des moyens de transmission des dites données aux moyens de traitement. On peut alors positionner latéralement au moins une zone de la fenêtre (telle une zone de base) ou toute la fenêtre sous forme de bande ou non en fonction du point de fuite (ce qui n'exclut pas d'autre paramètres de positionnement dont un angle de virage ou au volant et sans recours à des moyens supplémentaires de détermination du point de fuite.

L'invention porte en outre sur un véhicule comportant un système selon les deux paragraphes précédents.

Selon un autre objet de l'invention, on prévoit un produit de programme d'ordinateur comportant une ou plusieurs séquences d'instructions exécutables par une unité de traitement d'information, l'exécution desdites séquences d'instructions permettant une mise en oeuvre du procédé selon l'une quelconque des caractéristiques du procédé précédent.

D'autres caractéristiques, buts et avantages de la présente invention apparaîtront à la lecture de la description détaillée qui va suivre, et en regard des dessins annexés, donnés à titre d'exemples non limitatifs et sur lesquels :
La figure 1 illustre les phases principales d'un procédé de détermination de distances de visibilité.
La figure 2a montre un cas de détermination d'une région d'intérêt pertinente et la figure 2b présente un cas de non pertinence tel qu'il peut se produire selon les techniques actuelles.
La figure 3 est un diagramme d'étapes de mise en oeuvre du procédé de l'invention.
Les figures 4 et 5 représentent deux cas de formation d'une fenêtre de recherche selon l'invention dans un environnement routier avec virage.
Les figures 6 à 9 schématisent quatre exemples de fenêtres de recherche obtenues par l'invention.

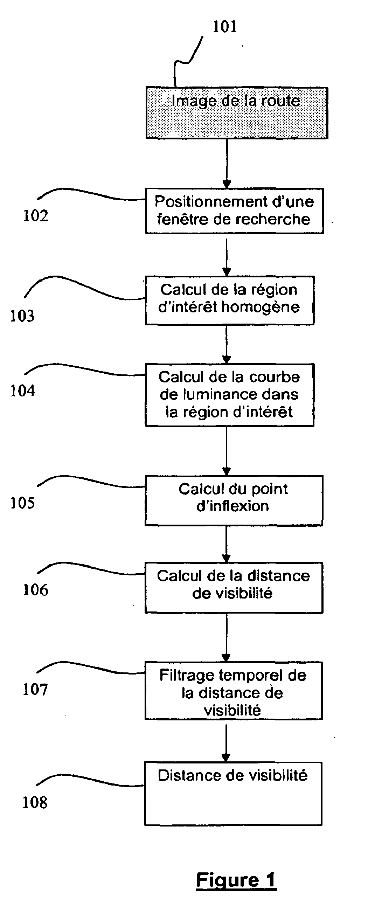

En référence aux figures 1 à 5, on a illustré des exemples de mise en oeuvre de l'invention pour déterminer une région d'intérêt dans une fenêtre de recherche optimisée. Dans ces exemples, la détermination d'une région d'intérêt a pour application la définition d'une distance de visibilité en particulier par temps de brouillard. Le calcul de la distance de visibilité permet par exemple de fournir à un automobiliste une distance maximum de conduite, une distance de sécurité minimale à respecter. Cette application à la détection d'une distance de visibilité constitue un exemple permettant de comprendre clairement l'invention mais ne la limite aucunement. La méthode de définition d'une fenêtre de recherche selon l'invention peut en effet être appliquée à un algorithme de détection d'obstacles sur la route. L'évaluation de la distance de visibilité fait par exemple intervenir les étapes illustrées en figure 1.
- on acquiert une image de l'environnement situé en avant d'un véhicule (étape 101).
- on détermine une région d'intérêt dans l'image. Auparavant, on positionne avantageusement dans l'image une fenêtre de recherche à l'intérieur de laquelle on effectue le traitement nécessaire à la détermination de la région d'intérêt (étape 102).

La détermination de la région d'intérêt (étape 103) peut s'opérer par la méthode dite par accroissement de régions. Selon cette méthode, la luminance de chaque pixel est analysée et comparée avec la luminance des pixels qui lui sont voisins. Si l'écart de luminance est inférieur à un seuil prédéfini, alors on étend la région d'intérêt à ces pixels voisins de sorte à définir une région homogène sinon on exclut ces pixels de la région d'intérêt. Cela est bien décrit dans le document : "A segmentation system based on thresholding. Graphical Models and Image Processing" [Käohler, 1981].

On détermine une courbe de niveaux de gris ou profil de luminance en prenant en compte le niveau de gris des lignes de la région d'intérêt (étape 104).

En identifiant cette courbe, on détermine le point d'inflexion pertinent.

A partir de la position du point d'inflexion dans l'image et de la position des capteurs d'assiette, on en déduit la distance de visibilité grâce à la loi de Koschmieder (étape 106). A cette fin, on peut se référer à la thèse de Nicolas Hautière et à l'article : "automatic fog detection and estimation of visibility through of an onboard camera" parue dans la revue "Machine vision and application" Springer-Verlag, BE, vol.17 N° du 1er avril 2006.

L'évaluation de la distance de visibilité est directement conditionnée par la pertinence du profil de luminance. Ce dernier dépend lui-même étroitement de l'homogénéité de la région d'intérêt et donc de l'emplacement préalable de la fenêtre de recherche.

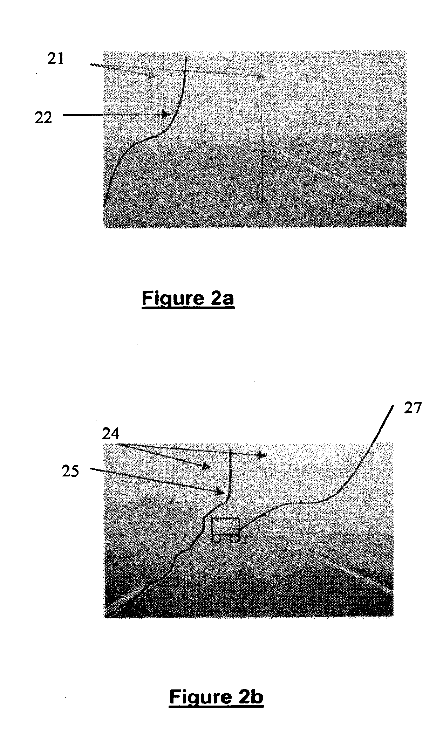

La figure 2a est une photo d'un environnement situé en avant du véhicule et comprenant peu de détails. La fenêtre de recherche est une bande verticale délimitée par des bordures verticales et rectilignes 21 traversant l'image de bas en haut sans rencontrer de points particuliers car aucun obstacle ou objet environnant (tel un panneau, un arbre...) n'est présent. Cette figure comprend un profil de luminance 22 présentant une forme sensiblement de "S" avec un seul point d'inflexion. La détermination de la distance de visibilité est alors possible et précise même sur la base d'une fenêtre de recherche conventionnelle.

Cela n'est cependant pas toujours le cas. A ce sujet, la figure 2b illustre une évaluation de distance de visibilité dans un contexte routier plus complexe. L'environnement situé en avant du véhicule comprend des objets tels qu'un véhicule 27 arrivant en sens inverse, des arbres etc. La région d'intérêt retenue sur la base d'une fenêtre de recherche conventionnelle délimitée par des bordures verticales 24 inclut ces objets. Cette région d'intérêt retenue n'est donc pas homogène. Le profil de luminance 25 est perturbé par la prise en compte de ces objets. La distance de visibilité est alors incorrecte. On comprend aisément que le placement imprécis de la fenêtre de recherche est au moins en partie responsable de ce résultat.

Comme indiqué précédemment, l'invention propose une méthode pour définir une fenêtre de recherche en vue de déterminer une région d'intérêt. Cette fenêtre de recherche est optimisée par rapport aux techniques connues.

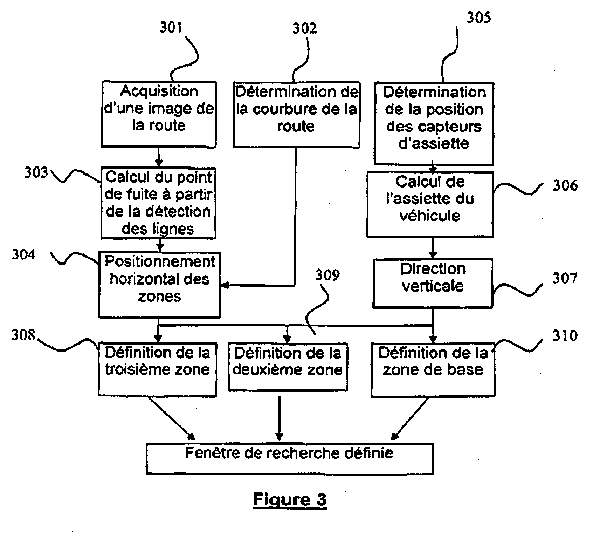

Un mode préféré de réalisation de l'invention va maintenant être détaillé en référence aux figures 3 à 9.

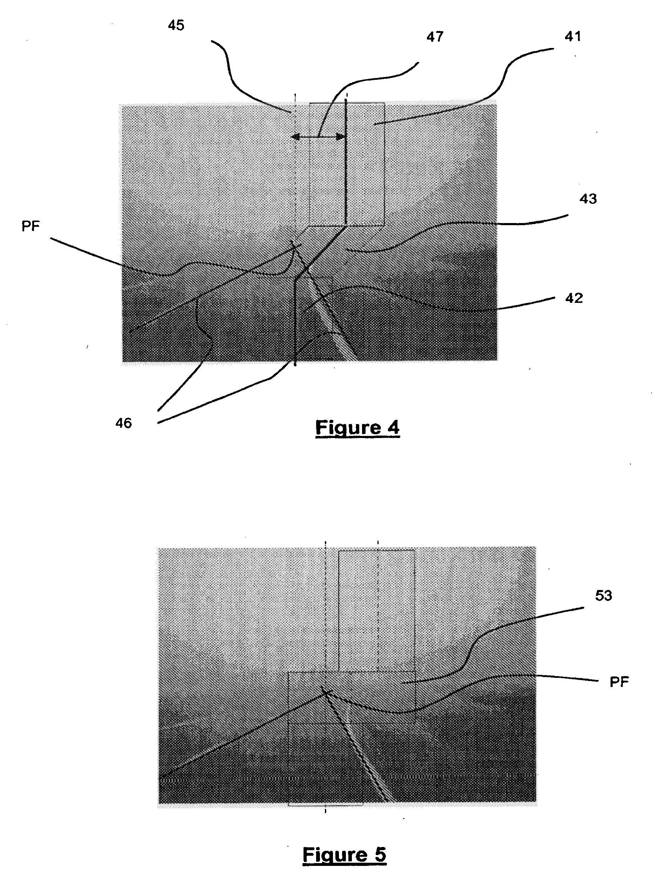

La figure 3 donne un exemple d'une suite de phases de définition d'une fenêtre. Au repère 301, une image de la route est acquise, notamment par tous moyens d'acquisition courants du type caméra numérique embarquée pointant l'avant du véhicule équipé du système de l'invention. Les figures 4 et 5 donnent deux illustrations d'images obtenues. Eventuellement, un ou des capteurs d'assiette sont utilisés à l'étape 305 et procurent une information 306 sur l'assiette du véhicule, information exploitée par le procédé pour corriger si nécessaire la direction verticale 307 de l'image acquise. On entend par direction verticale, la direction traversant l'image du bas vers le haut, entre la partie comportant la chaussée routière et la partie de ciel.

De préférence, la fenêtre de recherche s'étend du haut au bas de l'image suivant toute sa hauteur. Ce cas n'est cependant pas limitatif et la fenêtre de recherche peut être limitée en hauteur dans une portion de l'image. La fenêtre est délimitée latéralement par deux bordures dont la définition est un élément important du procédé ici présenté. L'invention tire profit du fait que l'image comporte des zones différentes selon sa direction verticale si bien que la fenêtre couvre des zones hétérogènes au niveau de la moyenne des niveaux de gris et au niveau des objets qui sont présents.

On détaille ci-après un cas habituel de configuration de l'image. Ainsi, le haut de l'image correspond au ciel. Le haut de l'image a donc une moyenne de niveaux de gris élevée par rapport au reste de l'image. Les objets que l'on peut habituellement trouver dans le haut de l'image sont des arbres, des lampadaires, des ponts etc.

Le bas de l'image correspond à la route et aux abords immédiats du véhicule. Le bas de l'image a donc une moyenne de niveaux de gris élevée, faible par rapport au reste de l'image. Les objets que l'on peut habituellement trouver dans le bas de l'image sont des marquages routiers, des véhicules suivis ou arrivant en sens inverse, des piétons ou encore tout objet posé sur le sol.

Le milieu de l'image correspond à une zone intermédiaire assurant une transition entre les zones mentionnées ci-dessus et formant le haut et le bas de l'image. C'est dans cette zone intermédiaire que se trouvera le point d'inflexion recherché pour évaluer la distance de visibilité.

Pour s'adapter à ces variations, on définit selon l'invention la fenêtre de recherche de sorte qu'elle ne soit pas totalement verticale. On entend par là qu'au moins une de ses bordures latérales n'est pas intégralement orientée selon la direction verticale de l'image. Alors que l'état de la technique utilise une forme figée de fenêtre avec une bande verticale, l'invention produit une fenêtre adaptable au contexte de l'image.

De nombreuses variations de forme de fenêtre entrent dans le cadre de l'invention. Notamment les deux bordures peuvent disposer de portions non verticales ou seulement l'une d'entre elles. Plusieurs portions non verticales peuvent être définies le long d'une ou des bordures.

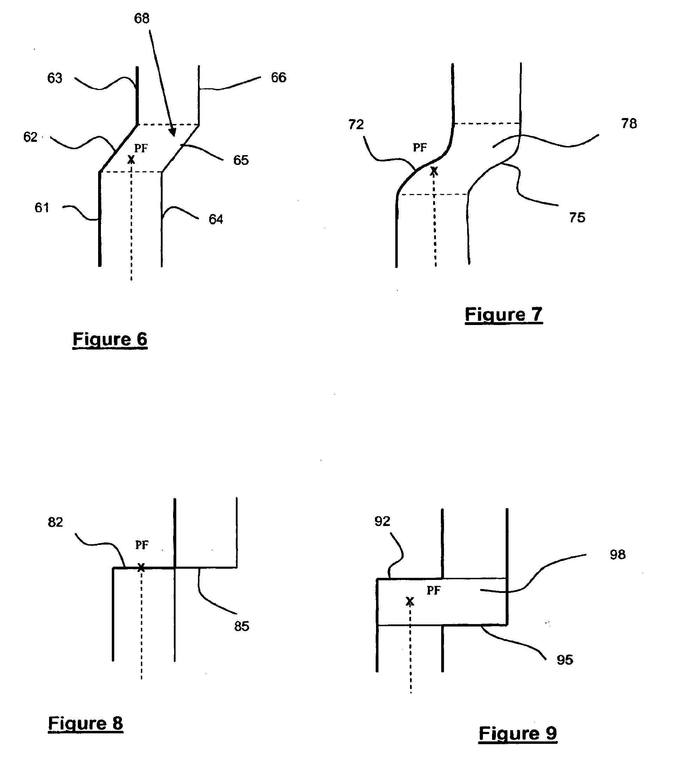

Les figures 6 à 9 donnent quelques exemples de réalisation.

A la figure 6, deux bordures parallèles et continues comportent chacune une portion verticale de base 61,64 puis une portion non verticale 62,65 sous forme d'un segment de droite incliné. Au dessus des portions non verticales 62,65, les bordures comportent à nouveau une portion verticale 63,66 terminant la fenêtre vers le haut de l'image. Alors que les portions verticales définissent deux zones rectangulaires, les portions non verticales 62, 65 délimitent latéralement une zone en forme de parallélogramme dite deuxième zone.

La figure 7 montre une variante dans laquelle la deuxième zone 78 produite par les portions non verticales 72, 75 est curviligne. La deuxième zone 78 est créée entre une zone de base et une zone haute encore appelée troisième zone.

Selon l'exemple de la figure 8, la bordure gauche comporte, entre deux portions verticales, une portion non verticale sous forme d'un segment horizontal 82 d'une largeur équivalente à la largeur de la fenêtre de recherche. La bordure droite est formée de façon similaire avec un segment 85 horizontal. Dans ce cas, la deuxième zone est une simple portion de droite horizontale et non une zone à deux dimensions c'est-à-dire une surface.

Un autre cas de portion non verticale horizontale est illustré en figure 9. Là encore, deux segments horizontaux 92, 95, chacun sur une bordure, sont intercalés entre des portions verticales. La deuxième zone est alors un rectangle 98 entre deux zones, de base et haute, également rectangulaires.

Un placement judicieux de la ou les portions non verticales dans l'image permet d'ajuster les zones de la fenêtre de recherche au contexte du traitement d'image. C'est particulièrement le cas en virage ou à en amont d'une courbe.

Les figures 4 et 5 en sont deux illustrations.

Ces deux figures représentent une même configuration routière. On entend par configuration routière le contexte de conduite donné par l'image prise en avant du véhicule équipé. Ce contexte comprend une chaussée avec une ou plusieurs voies de circulation généralement marquées au sol par des lignes continues ou discontinues, une partie de ciel et un environnement souvent très variable incluant des véhicules, des obstacles, des objets bordant la chaussée tels des panneaux, etc. Le cas de figures 4 et 5 est une circulation à droite d'une chaussée à deux sens de circulation, à l'amorce d'un virage. Alors que le virage serait mal pris en compte dans une fenêtre à la forme d'une simple bande, la fenêtre obtenue par l'invention s'adapte à la présence d'une courbe grâce aux portions non verticales des bordures.

Dans la figure 4, une fenêtre géométriquement similaire à celle de la figure 6 est définie de la manière suivante :
- la zone de base 42 est placée de sorte à couvrir une partie de la chaussée ; elle est centrée horizontalement sur une ligne verticale 45 passant par le point PF qui sera décrit par la suite.
- la troisième zone 41 est placée de sorte à couvrir une partie du ciel ;
- la deuxième zone 43 relie les deux zones précédentes avec un décalage latéral 47 suivant l'orientation du virage.

Dans la figure 5, ce décalage est également réalisé avec une deuxième zone 53 de géométrie similaire à celle décrite en référence à la figure 9.

De manière avantageuse, la position des zones est déterminée comme suit en référence à la figure 3.

A l'étape 303, on calcule la position d'un point de fuite PF correspondant à la terminaison de la chaussée à l'horizon. Dans le cas de la figure 3, cette position est obtenue en calculant l'intersection des tangentes 46 de deux lignes de marquage au sol de la chaussée, suivant une technique connue. Cette solution n'est pas limitative. Une alternative consiste à déterminer une ligne d'horizon dans l'image et à en trouver l'intersection avec une tangente à une ligne de marquage au sol. Une autre solution est d'exploiter les données d'un dispositif d'avertissement de franchissement de lignes (encore dénommé « lane departure warning system ») apte par sa fonction à déterminer la position des lignes de marquage au sol et capable de fournir les coordonnées de leur point de fuite. Par ailleurs, la position du point fuite peut être obtenue de données video dans la mesure où le point de convergence des vecteurs de déplacement des objets suivis (fixes relativement à la chaussée) correspond au point de fuite.

Dans les exemples des figures 4 à 9, le point de fuite PF est employé pour centrer la zone de base autour d'une ligne verticale passant par le point de fuite. Cela permet de placer la zone de base bien en correspondance de la chaussée et d'assurer une bonne continuité avec le reste de la fenêtre de recherche en particulier lors de la transition vers le ciel. Un résultat avantageux est que la sélectivité du placement de la fenêtre autorise une réduction de sa largeur si bien que les calculs ultérieurs pour la région d'intérêt sont réduits. On peut fixer la largeur de la fenêtre de recherche à une valeur de 160 pixels, c'est une largeur moyenne optimale qu'on peut déterminer à partir d'un échantillon d'images représentant plusieurs types de routes avec différentes sortes de marquages. De même, on peut définir une hauteur optimale de la deuxième zone. Celle ci est centrée sur la ligne d'horizon et s'étend à 70 pixels des deux cotés haut et bas de l'image.

Le calage horizontal de la troisième zone peut être défini sous forme d'un décalage horizontal relativement à la zone de base. Bien que l'on puisse fixer la valeur de décalage, il est avantageux de la faire varier selon le contexte routier et en particulier suivant les courbes de la route. Dans ce cadre, une solution avantageuse consiste à décaler horizontalement la troisième zone avec une valeur reflétant l'amplitude du virage emprunté ou en amont du véhicule équipé. Cette valeur peut être une fonction (égale ou proportionnelle notamment) d'une au moins des informations suivantes :
- l'angle de rotation du volant ou une proportion de cet angle ;
- le rayon de courbure du virage tel que déterminé par les images acquises selon le procédé de l'invention ou au moyens d'un dispositif de détection de franchissement de lignes LDWS ;
- le rayon de courbure du virage tel qu'obtenu ou déterminé à partir des données cartographiques d'un système de navigation par exemple au standard GPS (pour global positioning system) ;
- l'angle de rotation d'un projecteur avant du véhicule si celui-ci est équipé d'un dispositif d'éclairage directionnel.

On peut combiner ces informations pour ajuster la précision du décalage horizontal de la troisième zone Utiliser alternativement ces informations entre autre dans le cadre de l'invention. Par exemple, l'information issue de l'éclairage directionnel est employée par faible luminosité ambiante (la nuit en particulier) et l'angle au volant fournit la donnée pertinente le reste du temps. C'est une façon efficace de limiter le décalage la nuit dans la mesure où les dispositifs d'éclairage directionnels ont une amplitude angulaire généralement inférieur à l'angle au volant. Un autre exemple consiste à exploiter les informations de rayon de courbure d'un virage issues de la cartographie ou de la détection sauf lorsque l'angle au volant dépasse une valeur prédéterminée lui donnant la priorité pour le calcul du décalage.

En suivant le diagramme de la figure 3, la troisième zone 308 et la zone de base 310 sont ainsi définies. La deuxième zone est également définie (étape 309). Avantageusement, elle est centrée en hauteur suivant le point de fuite PF précédemment décrit.

Dans le cas de la figure 8, la deuxième zone 82 se trouve alors sur la ligne d'horizon portant le point de fuite PF.

Dans les cas des figures 6 et 7, la ou les portions non verticales des bordures ont une composante verticale dont le milieu est calé sur le point de fuite PF.

Dans le cas de la figure 9, le décalage vertical des portions 92 et 95 donne la hauteur de la deuxième zone 98. Ce mode de réalisation est par ailleurs présenté dans le contexte d'une image routière à la figure 5 à laquelle la zone de base est centrée par rapport au point de fuite et la troisième zone est décalée dans le sens du virage alors que la deuxième zone 53 effectue une transition par une surface rectangulaire centrée, selon sa hauteur, sur le point de fuite PF.

Les exemples illustrés comportent deux portions non verticales, chacune sur une bordure latérale. Ce cas n'est pas limitatif et une seule bordure peut comporter une portion non verticale La deuxième zone est alors délimitée latéralement par la portion non verticale et par une portion verticale en vis-à-vis sur la bordure opposée.

## Revendications

1. Procédé de définition d'une fenêtre de recherche d'une région d'intérêt pour le traitement d'une image routière, la fenêtre de recherche ayant une orientation longitudinale dirigée suivant la hauteur de l'image et étant délimitée latéralement par deux bordures,
**caractérisé par le fait que** l'on adapte la forme de la fenêtre de recherche à la configuration routière en définissant au moins une portion non verticale (62, 65, 72, 75, 82, 85, 92, 95) sur chacune des bordures, et **par le fait que** l'on positionne cette portion non verticale (62, 65, 72, 75, 82, 85, 92, 95) de sorte qu'elle se situe au moins partiellement dans une zone de l'image de transition entre une chaussée routière et le ciel, et dans lequel on définit
- trois zones dans la fenêtre de recherche avec:
une zone de base (42) délimitée latéralement par une portion verticale (61, 64) de base de chacune des bordures ;
une deuxième zone (43, 53, 68, 78, 98) située au dessus de ladite zone de base et délimitée latéralement par la portion non verticale (62, 65, 72, 75, 82, 85, 92, 95) de chacune des bordures;
une troisième zone (41) délimitée latéralement par une portion verticale haute de chacune des bordures, ladite deuxième zone (43, 53, 68, 78, 98) reliant ladite zone de base (42) et ladite troisième zone (41),
**caractérisé en ce que**
- on définit la position d'un point de fuite PF d'une chaussée routière,
et on positionne latéralement la zone de base (42) en fonction de la position du point de fuite PF, le dit point de fuite PF étant à l'intérieur de la dite deuxième zone (43, 53, 68, 78, 98).

2. Procédé selon la revendication précédente dans lequel la bordure comporte une portion de base (61, 64) verticale en dessous de la portion non verticale (62, 65, 72, 75, 82, 85, 92, 95).

3. Procédé selon l'une des revendications précédentes dans lequel on choisit la portion non verticale (62, 65, 72, 75, 82, 85, 92, 95) parmi : un segment de droite horizontale, un segment de droite incliné, une portion de ligne curviligne.

4. Procédé selon l'une des revendications précédentes dans lequel on définit au moins une portion non verticale (62, 65, 72, 75, 82, 85, 92, 95) sur l'autre des bordures.

5. Procédé selon la revendication précédente dans lequel les portions non verticales (62, 65, 72, 75, 82, 85, 92, 95) des deux bordures sont parallèles.

6. Procédé selon la revendication 1 dans lequel on obtient la position du point de fuite PF au moyen d'un dispositif de détection de franchissement de ligne blanche.

7. Procédé selon l'une des revendications 1 ou 6 dans lequel on centre latéralement la zone de base (42) sur le point de fuite PF.

8. Procédé selon l'une des quelconque des revendications 1, 6 et 7 dans lequel les bordures non verticales de ladite deuxième zone (43, 53, 68, 78, 98) sont déplacées et/ou déformées selon l'orientation d'un virage de la chaussée routiére.

9. Procédé selon l'une des revendications 1 et 6 à 8 dans lequel on définit une troisième zone (41) délimitée latéralement par une portion verticale haute de chacune des bordures, ladite deuxième zone(43, 53, 68, 78, 98) reliant ladite zone de base (42) et ladite troisième zone (41) et on positionne la troisième zone (41) avec un décalage latéral (47) relativement à la zone de base (42), le décalage (47) étant fonction d'une information de courbure d'un virage de la chaussée routière.

10. Procédé selon l'une de revendications 1 et 6 à 9 dans lequel on définit la position d'au moins un point d'une ligne d'horizon de l'image et on centre verticalement la zone deuxième (43, 53, 68, 78, 98) sur ledit point de la ligne d'horizon.

11. Procédé de détermination d'une distance de visibilité par temps de brouillard dans lequel on détermine une région d'intérêt au sein d'une fenêtre de recherche définie en mettant en oeuvre le procédé selon l'une quelconque des revendications précédentes et dans laquelle on détermine un niveau moyen de luminance pour une pluralité de lignes de cette région d'intérêt, on en déduit un profil de luminance, on identifie un point d'inflexion sur ce profil de luminance et on déduit de ce point d'inflexion une distance de visibilité.

12. Système pour déterminer une fenêtre de recherche de région d'intérêt dans une image caractérisé en qu'il comprend un dispositif d'acquisition d'une image et des moyens de traitement agencés pour mettre en oeuvre le procédé selon l'une quelconque des revendications 1 à 10 ou selon le procédé selon la revendication 11.

13. Système selon la revendication précédente comportant un dispositif de détection de franchissement de lignes blanches configuré pour produire des données de définition d'une position d'un point de fuite et des moyens des transmission des dites données aux moyens de traitement.

## Patentansprüche

1. Verfahren zur Festlegung eines Suchfensters eines interessierenden Bereichs zur Verarbeitung eines Straßenbildes, wobei das Suchfenster eine in der Bildhöhe verlaufende Längsausrichtung hat und seitlich von zwei Rändern begrenzt ist, **dadurch gekennzeichnet, dass** die Form des Suchfensters an die Straßenform angepasst wird, wobei wenigstens ein nicht vertikaler Abschnitt (62, 65, 72, 75, 82, 85, 92, 95) auf jedem der Ränder festgelegt wird, und dass dieser nicht vertikale Abschnitt (62, 65, 72, 75, 82, 85, 92, 95) solchermaßen angeordnet wird, dass er wenigstens zum Teil in einem Bildbereich im Übergang zwischen einer Fahrbahn und dem Himmel liegt, und bei dem:
- im Suchfenster drei Bereiche festgelegt werden mit:
einem Basisbereich (42), der seitlich durch einen vertikalen Basisabschnitt (61, 64) eines jeden Rands begrenzt ist,
einem zweiten Bereich (43, 53, 68, 78, 98), der über dem Basisbereich liegt und seitlich durch den nicht vertikalen Abschnitt (62, 65, 72, 75, 82, 85, 92, 95) eines jeden Rands begrenzt ist;
einem dritten Bereich (41), der seitlich durch einen oberen vertikalen Abschnitt eines jeden Rands begrenzt ist, wobei der zweite Bereich (43, 53, 68, 78, 98) den Basisbereich (42) und den dritten Bereich (41) verbindet,
**dadurch gekennzeichnet, dass** die Position eines Fluchtpunkts PF einer Fahrbahn festgelegt wird und der Basisbereich (42) in Abhängigkeit der Position des Fluchtpunkts PF seitlich angeordnet wird, wobei der Fluchtpunkt PF innerhalb des zweiten Bereichs (43, 53, 68, 78, 98) liegt.

2. Verfahren nach dem vorhergehenden Anspruch,
bei dem der Rand einen vertikalen Basisabschnitt (61, 64) unterhalb des nicht vertikalen Abschnitts (62, 65, 72, 75, 82, 85, 92, 95) aufweist.

3. Verfahren nach einem der vorhergehenden Ansprüche,
bei dem der nicht vertikale Abschnitt (62, 65, 72, 75, 82, 85, 92, 95) ausgewählt ist aus: einem horizontalen Geradensegment, einem schrägen Geradensegment, einem gekrümmten Linienabschnitt.

4. Verfahren nach einem der vorhergehenden Ansprüche,
bei dem wenigstens ein nicht vertikaler Abschnitt (62, 65, 72, 75, 82, 85, 92, 95) auf dem anderen Rand festgelegt wird.

5. Verfahren nach dem vorhergehenden Anspruch,
bei dem die nicht vertikalen Abschnitte (62, 65, 72, 75, 82, 85, 92, 95) der beiden Ränder parallel sind.

6. Verfahren nach Anspruch 1,
bei dem die Position des Fluchtpunkts PF mittels einer Vorrichtung zum Erkennen des Verlassens der markierten Fahrspur erlangt wird.

7. Verfahren nach einem der Ansprüche 1 oder 6,
bei dem der Basisbereich (42) seitlich auf den Fluchtpunkt PF zentriert wird.

8. Verfahren nach einem der Ansprüche 1, 6 und 7,
bei dem die nicht vertikalen Ränder des zweiten Bereichs (43, 53, 68, 78, 98) entsprechend der Richtung einer Kurve der Fahrbahn verschoben und/oder verformt sind.

9. Verfahren nach einem der Ansprüche 1 und 6 bis 8,
bei dem ein dritter Bereich (41) festgelegt wird, der seitlich durch einen oberen vertikalen Abschnitt eines jeden Rands begrenzt ist, wobei der zweite Bereich (43, 53, 68, 78, 98) den Basisbereich (42) und den dritten Bereich (41) verbindet, und der dritte Bereich (41) mit einem seitlichen Versatz (47) zum Basisbereich (42) angeordnet wird, wobei der Versatz (47) von einer Information zur Krümmung einer Kurve der Fahrbahn abhängt.

10. Verfahren nach einem der Ansprüche 1 und 6 bis 9,
bei dem die Position von wenigstens einem Punkt einer Horizontlinie des Bildes festgelegt wird und der zweite Bereich (43, 53, 68, 78, 98) vertikal auf diesen Punkt der Horizontlinie zentriert wird.

11. Verfahren zum Ermitteln einer Sichtweite bei Nebel,
bei dem ein interessierender Bereich innerhalb eines Suchfensters bestimmt wird, das durch Ausführen des Verfahrens nach einem der vorhergehenden Ansprüche festgelegt wird und bei dem ein mittlerer Leuchtdichtewert für eine Vielzahl von Linien dieses interessierenden Bereichs ermittelt wird, ein Leuchtdichteprofil daraus abgeleitet wird, ein Krümmungspunkt auf diesem Leuchtdichteprofil identifiziert wird und von diesem Krümmungspunkt eine Sichtweite abgeleitet wird.

12. System zum Bestimmen eines Suchfensters eines interessierenden Bereichs in einem Bild,
**dadurch gekennzeichnet, dass** es eine Vorrichtung zum Erfassen eines Bildes und Bearbeitungsmittel umfasst, die zum Durchführen des Verfahrens nach einem der Ansprüche 1 bis 10 oder gemäß dem Verfahren nach Anspruch 11 ausgebildet sind.

13. System nach dem vorhergehenden Anspruch mit einer Vorrichtung zum Erkennen des Verlassens der markierten Fahrspur, die dazu ausgebildet ist, Daten zum Bestimmen einer Position eines Fluchtpunkts zu erzeugen, und Mitteln zum Übertragen dieser Daten an die Verarbeitungsmittel.

## Claims

1. Method for definition of a search window of a region of interest for processing of a road image, the search window having a longitudinal orientation which is directed according to the height of the image, and being delimited laterally by two borders, **characterised in that** the form of the search window is adapted to the road configuration by defining at least one non-vertical portion (62, 65, 72, 75, 82, 85, 92, 95) on each of the borders, and **in that** this non-vertical portion (62, 65, 72, 75, 82, 85, 92, 95) is positioned such that it is situated at least partially in an area of the image of transition between a highway and the sky, and wherein there is definition of:
- three areas in the search window with:
a base area (42) which is delimited laterally by a vertical base portion (61, 64) of each of the borders;
a second area (43, 53, 68, 78, 98) which is situated above the said base area and is delimited laterally by the non-vertical portion (62, 65, 72, 75, 82, 85, 92, 95) of each of the borders;
a third area (41) which is delimited laterally by a high vertical portion of each of the borders, the said second area (43, 53, 68, 78, 98) connecting the said base area (42) and the said third area (41),
**characterised in that**:
- there is definition of the position of a vanishing point PF of a highway, and the base area (42) is positioned laterally according to the position of the vanishing point PF, the said vanishing point PF being in the interior of the said second area (43, 53, 68, 78, 98).

2. Method according to the preceding claim, wherein the border comprises a vertical base portion (61, 64) below the non-vertical portion (62, 65, 72, 75, 82, 85, 92, 95).

3. Method according to one of the preceding claims, wherein the non-vertical portion (62, 65, 72, 75, 82, 85, 92, 95) is selected from amongst: a horizontal straight segment, an inclined straight segment, a curved line portion.

4. Method according to one of the preceding claims, wherein there is definition of at least one non-vertical portion (62, 65, 72, 75, 82, 85, 92, 95) on the other one of the borders.

5. Method according to the preceding claim, wherein the non-vertical portions (62, 65, 72, 75, 82, 85, 92, 95) of the two borders are parallel.

6. Method according to claim 1, wherein the position of the vanishing point PF is obtained by means of a device for detection of clearance of a white line.

7. Method according to one of claims 1 or 6, wherein the base area (42) is centred laterally on the vanishing point PF.

8. Method according to any one of claims 1, 6 and 7, wherein the non-vertical borders of the said second area (43, 53, 68, 78, 98) are displaced and/or deformed according to the orientation of a bend of the highway.

9. Method according to one of claims 1 and 6 to 8, wherein there is definition of a third area (41) which is delimited laterally by a high vertical portion of each of the borders, the said second area (43, 53, 68, 78, 98) connecting the said base area (42) and the said third area (41), and the third area (41) is positioned with lateral offsetting (47) relative to the base area (42), the offsetting (47) depending on curvature information of a bend of the highway.

10. Method according to one of claims 1 and 6 to 9, wherein there is definition of the position of at least one point of a horizon line of the image, and the second area (43, 53, 68, 78, 98) is centred vertically on the said point of the horizon line.

11. Method for determination of a visibility distance in foggy weather, wherein there is determination of a region of interest within a search window defined by implementing the method according to any one of the preceding claims, and wherein there is determination of a mean level of brightness for a plurality of lines of this region of interest, a brightness profile is deduced from this, there is identification of a point of inflection on this brightness profile, and a visibility distance is deduced from this point of inflection.

12. System for determination of a search window of a region of interest in an image, **characterised in that** it comprises a device for acquisition of an image, and processing means which are designed to implement the method according to any one of claims 1 to 10, or in accordance with the method according to claim 11.

13. System according to the preceding claim, comprising a device for detection of clearance of white lines, which is configured to produce data of definition of a position of a vanishing point, and means for transmission of the said data to the processing means.
